(19) Europäisches Patentamt
European Patent Office
Office européen des brevets

(11) Publication number: **0 053 409**
**A1**

(12) **EUROPEAN PATENT APPLICATION**

(21) Application number: **81201220.1**

(22) Date of filing: **30.10.81**

(51) Int. Cl.³: **C 22 B 60/02,** C 01 B 25/46, C 01 G 43/01

(30) Priority: **03.12.80 NL 8006571**

(43) Date of publication of application: **09.06.82 Bulletin 82/23**

(84) Designated Contracting States: **AT BE CH DE FR GB IT LI LU NL SE**

(71) Applicant: **STAMICARBON B.V., Postbus 10, NL-6160 MC Geleen (NL)**

(72) Inventor: **Weterings, Cornelis Antonius M., Schinekssstraat 60, NL-6171 AP Stein (NL)**
Inventor: **Janssen, Johannes Anna, Kloosterlaan 36, NL-6451 ER Schinveld (NL)**

(74) Representative: **Roeffen, Wilhelmus Johannes Maria et al, OCTROOIBUREAU DSM Postbus 9, NL-6160 MA Geleen (NL)**

(54) **Process for the recovery of a uranium-containing concentrate and phosphoric acid.**

(57) A uranium containing concentrate and phosphoric acid are obtained by digesting phosphate rock with $H_2SO_4$ and treating the $H_3PO_4$-solution — remaining after removal of calciumsulphate —, if so desired after evaporation, with a reducing agent, an organic dispersant and an inorganic F-compound, whereafter the resulting uraniumcontaining precipitate is separated off and phosphoric acid is recovered from the remaining mixture.

As inorganic F-compound use is made of $NH_2F$, which is prepared in situ by absorbing in water the gases escaping during the digestion and the optional evaporation, converting the $H_2SiF_6$-solution formed with $NH_3$ to and $SiO_2$-containing $NH_4F$ solution, separing off the $SiO_2$ and applying the resulting $NH_4F$-solution, for the uranium precipitation.

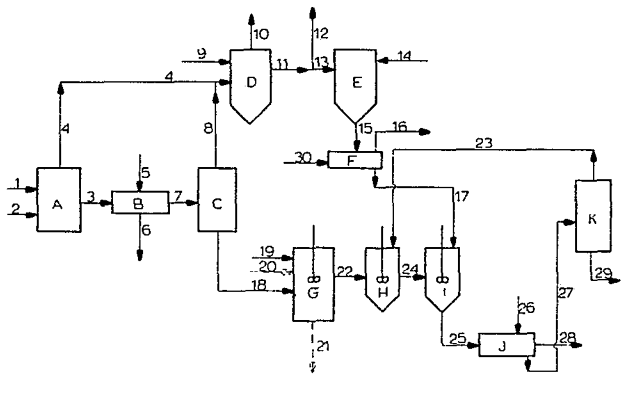


EP 0 053 409 A1

# PROCESS FOR THE RECOVERY OF A URANIUM-CONTAINING CONCENTRATE AND PHOSPHORIC ACID

The invention relates to a process for the recovery of a uranium-containing concentrate and phosphoric acid, by digesting phosphate rock with sulphuric acid, separating calcium sulphate from the digestion liquor and, if so desired, evaporating the remaining phosphoric acid solution and by treating the phosphoric acid solution with a reducing agent, an organic dispersant and an inorganic precipitating agent containing fluorine, separating out the uranium-containing precipitate thus formed and recovering the phosphoric acid from the remaining mixture.

Such a process for recovering a uranium-containing concentrate from wet-process phosphoric acid is known from Netherlands Patent Application 7,900,581, where the inorganic fluorine-containing compound used is preferably ammonium fluoride.

A disadvantage of this known process is that the ammonium fluoride, which is preferably added in solid form, must be bought as such, which has an adverse effect on the cost of uranium recovery, in view of the market price of ammonium fluoride.

The present invention provides a process for the recovery of a uranium-containing concentrate in wet-process phosphoric acid production, the fluorine-containing precipitating agent being prepared in situ in the process, which entails a considerable cost saving.

According to the invention, this is achieved by absorbing in water the fluorine- and silicon-containing gases obtained in the phosphate digestion and in the (optional) phosphoric acid evaporation, converting at least part of the fluosilicic acid solution thus formed with ammonia to a silica-containing ammonium fluoride solution, separating out the silica, and applying the remaining ammonium fluoride solution as precipitating agent for the uranium precipitation.

According to the invention, the waste gases, which besides HF and $SiF_4$ contain mainly $H_2O$ and $CO_2$, are absorbed in water, the major part of the HF and $SiF_4$ being converted to an aqueous $H_2SiF_6$ solution.

The remaining waste gas, consisting mainly of $CO_2$ and $H_2O$, is discharged. The $H_2SiF_6$ solution formed during the absorption often contains a small quantity of bound $P_2O_5$ and calcium, originating from the dust cloud transported along with the gases. If so desired, these components can be removed, at least in part, for example by filtration.

The $H_2SiF_6$ solution is then brought into contact, partly or in toto, with ammonia, the silicon being precipitated out as silica as per the equation:

$$H_2SiF_6 + 6\ NH_3 + (n + 2)\ H_2O \quad 6\ NH_4F + SiO_2 \cdot nH_2O$$

It has been found that to achieve good silica precipitation the concentration of the $H_2SiF_6$ solution used should be 15 to 24 % by wt., more in particular 16-20 % by wt. This is achieved by accurate mutual adjustment of the quantities of gas to be absorbed and the quantity of water, and if necessary by dilution and/or concentration of the reaction liquor formed. The reaction is preferably carried out under pressure with the aid of liquid ammonia, with an excess of ammonia such that the resultant solution contains approx. 2 % free ammonia. The temperature of the reaction is kept at about 80 °C by evaporating part of the excess of ammonia.

From the resultant diluted ammonium fluoride solution, the precipitated silica is next removed, for example by filtration, centrifugation. Optionally, the solution may be cooled in a crystallizer to e.g. 35 °C and the silica removed in a decanting centrifuge.

The resultant ammonia fluoride solution can be used as it is for the uranium precipitation. If so desired, the solution may also be concentrated and/or treated with ammonia beforehand, to precipitate out any remaining phosphate as triammonium phosphate.

The separated silica can be used for various purposes. If silica-deficient phosphates are used, in particular, the silica may be recycled to the phosphate digestion zone or added to the phosphoric acid from which calcium sulphate has been removed, for instance in the evaporation section, to dissolve as great a part as possible of the fluorine present in the phosphate. It is also possible to apply the silica, after washing and drying, as a filler for paints, plastics and rubbers. Preferably, the silica is at any rate in part used to remove the fluorine from the hot phosphoric acid remaining after uranium precipitation and removal of the dispersant. The silicofluoride-containing gas liberated in this operation can then be recycled to the absorption zone and there be absorbed to form a $H_2SiF_6$ solution.

The process according to the invention can in principle be used with any wet-process phosphoric acid production process, for example either with a process in which phosphate rock is converted with sulphuric acid direct to phosphoric acid and the desired calcium sulphate modification (the so-called direct dihydrate, hemihydrate or anhydrite processes) or with processes in which the calcium sulphate obtained as a byproduct in digestion is - optionally after separation from the phosphoric acid - converted to a different hydrate state (for example the so-called hemi-dihydrate or di-hemihydrate processes). The process can also be applied with phosphoric acid processes in which the phosphate is treated beforehand with phosphoric acid, if necessary followed by treatment to remove metal components and other contaminants.

The phosphoric acid obtained in such processes, from which calcium sulphate has been removed, can be subjected to the precipitation treatment immediately, but is preferably concentrated beforehand by evaporating, for example to a $P_2O_5$ content of 45-60 % by wt. If so desired, the phosphoric acid may be treated prior to the precipitation step with a flocculating agent to recover yttrium and lanthanides, as is described in non-prepublished Netherlands Patent Application 8,002,462.

The uranium-containing precipitate formed in the process also contains part of the metals remaining in the raw phosphoric acid, e.g. yttrium, lanthanides and vanadium. This precipitate is separated from the phosphoric acid/dispersant/water mixture, for example by centrifugation or filtration. The separated concentrate can be upgraded by various methods known per se.

The mixture of phosphoric acid, dispersant and water resulting after the uranium-containing precipitate has been separated out can be separated in various ways, for example by distillation, decanting or extraction, after which the separated dispersant can be recycled back to the precipitation step, optionally after a further treatment, such as rectification.

The remaining phosphoric acid can be used for various purposes, for instance as raw material for the preparation of high-grade fertilizer products, technical-grade phosphates and cattle-feed phosphate.

The invention will be elucidated with reference to the accompanying figure, in which a mode of realization of the process is represented diagrammatically.

To digestion vessel A, phosphate rock is added through line 1 and sulphuric acid through line 2. Through line 3, a decomposition slurry containing phosphoric acid and calcium sulphate is discharged to filter B, to which water is added through line 5. Through line 4, a gas containing fluorine and silicon is discharged from A to absorption vessel D. From filter B, wet calcium sulphate is discharged through line 6 and a phosphoric acid solution fed through line 7 to evaporator C, from where a gas containing fluorine and silicon is fed through line 8 to absorption vessel D, while a concentrated phosphoric acid solution is fed through line 18 to reaction vessel G. Any sediment formed in C is discharged and can be recycled to digestion vessel A. Water is fed to absorption vessel D through line 9. Preferably, part of the solution formed is recycled over absorption vessel D. From D, the unabsorbed gas is discharged through line 10 and an aqueous $H_2SiF_6$ solution through line 11; part of this solution is discharged through line 12 and part fed through line 13 to reaction vessel E, to which ammonia is added through line 14. From E, a silica-containing ammonium fluoride solution is fed through line 15 to filter F, to which water is added through line 30 and from which silica is discharged through line 16 and an ammonium fluoride solution is fed through line 17 to precipitation vessel I.

To reaction vessel G, to which phosphoric acid is supplied through line 18, a reducing agent is supplied through line 19 to reduce the uranium from the hexavalent to the tetravalent state, for instance powdered metallic iron, zinc or aluminium.

From reaction vessel G, a reduced phosphoric acid solution is fed through line 22 to mixing vessel H, to which an organic dispersant is supplied through line 23, for instance an aliphatic ketone (acetone) or alcohol (methanol). From H, the resultant phosphoric acid/dispersant mixture is fed through line 24 to precipitation vessel I, to which an $NH_4F$ solution is supplied through line 17. The resultant mixture is fed through line 25 to filter J, to which also water is supplied, through line 26. From J, a uranium-containing concentrate is discharged through line 28, and a mixture of phosphoric acid and organic dispersant is fed through line 27 to distillation column K. Through line 29, a phosphoric acid solution is discharged from the bottom of K, while the organic dispersant is sent back from the top of K through line 23 to mixing vessel H.

Since it has been found that the uranium-precipitation efficiency increases if phosphoric acid with a low sulphate content is applied, a bivalent metal compound is preferably added to the phosphoric acid, so that the sulphate present precipitates. To this end, a bivalent metal compound (for example a barium salt of phosphate rock) may be supplied through line 20 to reaction vessel G, and the resultant metal sulphate precipitate discharged through line 21. This precipitate, which also contains a quantity of $H_3PO_4$, can be sent back to digestion vessel A if so desired.

Example 1

In a device as shown in the figure, 92,322 kg phosphate rock with a $P_2O_5$ content of 33.5 % by wt. is introduced per hour into reaction vessel A through 1, and 121,550 kg 70 wt.% $H_2SO_4$ through 2. The temperature in vessel A is kept at 75-80 °C. Through 4, 3210 kg gas, which contains - besides for the main part $CO_2$ and water - 380 kg $SiF_4$ and 90 kg HF, is fed from vessel A to absorption vessel D. From vessel A, 210,662 kg reaction liquor is fed through 3 to filter B, to which 110,464 kg water is added through 5. Through 6, 221,464 kg wet calcium sulphate (30 wt.% water) is discharged from B, and through 7, 100,000 kg phosphoric acid with a $P_2O_5$ content of 30 wt.% is fed to evaporator C. The temperature in C is kept at 125 °C. Through 8, 37,620 kg gas, which contains - besides for the main part water - 718 kg $SiF_4$ and 763 kg HF, is fed from C to absorption vessel D, to which 5375 kg water is supplied through 9 to maintain the desired concentration of the $H_2SiF_6$ absorption liquor. The unabsorbed gases, which contain mainly water vapour, $CO_2$, HF and $SiF_4$, are discharged through 10. Through 11, 8500 kg of a 20 wt.% $H_2SiF_6$ solution is fed from D, 1472 kg of which is discharged through 12 and 7028 kg fed to reaction vessel E through 13. To E, 1090 kg liquid ammonia is supplied through 14. The temperature in E is kept at approx. 80 °C. Through 15, 8118 kg reaction liquor, consisting of an ammonium fluoride solution in which solid silica is suspended, is fed through 15 to filter F. To F, 277 kg water is also supplied, through 30. From F, 703 kg silica hydrate with an $SiO_2$ content of 80 % is discharged through 16, while 7692 kg of a 24 wt.% $NH_4F$ solu-

tion is fed through 17 to precipitation vessel I. From evaporator C, 61,537 kg phosphoric acid with a $P_2O_5$ content of 52 wt.% is fed through 18 to reaction vessel G, to which 5.1 kg iron powder is also fed, through 19. From G, 61,542 kg phosphoric acid solution is fed through 22 to mixing vessel H, to which 16,000 kg acetone is supplied through 23. The resultant mixture (77,542 kg) is fed through 24 to precipitation vessel I.

From I, 85,239 kg reaction mixture is fed through 25 to filter J, to which 2046 kg water is supplied through 26. Through 28, 4102 kg uranium-containing concentrate with a solids content of 75 wt.% by wt. is discharged from J, while 83,183 kg of a phosphoric acid/acetone mixture is fed through 27 to distillation column K. From here, 67,188 kg phosphoric acid with a $P_2O_5$ content of 47 wt.% is discharged through 29, while 16,000 kg acetone is recycled through 23 to mixing vessel H.

Example 2

In a device as shown in the figure, 92,322 kg phosphate rock ($P_2O_5$ content 33.5 wt.%) and 121,550 kg 70 wt.% $H_2SO_4$ are introduced per hour into reaction vessel A, through 1 and 2, respectively. The temperature in vessel A is kept at 75-80 °C. Through 4, 3210 kg gas (besides $CO_2$ and $H_2O$, 380 kg $SiF_4$ and 90 kg HF) is fed from A to absorption vessel D, and through 3, 210,662 kg reaction liquor to filter B, to which 110,802 kg water is supplied through 5.

Through 6, 221,464 kg wet calcium sulphate (30 wt.% water) is discharged from B, while 100,000 kg phosphoric acid (30 wt.% $P_2O_5$) is fed through 7 to evaporator C. The temperature in C is kept at 125 °C. Through 8, 37,620 kg gas (besides mainly water, 763 kg HF and 718 kg $SiF_4$) is fed from C to absorption vessel D, to which 5375 kg water is supplied through 9. The unabsorbed residual gas, containing mainly $CO_2$, $H_2O$, $SiF_4$ and HF, is discharged through 10. Through 11 8500 kg of a 20 wt.% $H_2SiF_6$ solution is fed from D, 2560 kg of which is discharged through 12 and 5940 kg supplied through 13 to reaction vessel E.

To E, 14,908 kg liquid ammonia is fed through 14. The temperature in E is kept at approx. 80 °C. Through 15, 6848 kg reaction liquor is fed to filter F, and through 30 ~~246 kg water~~ is fed to F. From F, 594 kg silica hydrate ($SiO_2$ content 80 %) is discharged through 16, and through 17, 6500 kg of a 24 wt.% $NH_4F$ solution is fed to precipitation vessel I. From evaporator C, 61,537 kg phosphoric acid (52 wt.% $P_2O_5$) is fed

through 18 to reaction vessel G, to which 5.1 kg iron powder is fed through 19 and 2053 kg phosphate rock ($P_2O_5$ content 33.5 wt.%) through 20. From G, 60,375 kg phosphoric acid solution (53.2 wt.% $P_2O_5$) is fed through 22 to mixing vessel H, while 3270 kg precipitate including phosphoric acid is discharged through 21.

To mixing vessel H, 15,907 kg acetone is supplied through 23, while 76,232 kg resultant mixing liquor if fed through 24 to precipitation vessel I.

From I, 82,732 kg reaction mixture is fed through 25 to filter J, to which 2000 kg water is supplied through 26. Through 28, 4461 kg uranium-containing concentrate (solids content 75 wt.%) is discharged from J, while 80,271 kg of a phosphoric acid/acetone mixture is fed through 27 to distillation column K. From K, 64,364 kg phosphoric acid (49.5 wt.% $P_2O_5$) is discharged through 29, while 15,907 kg acetone is recycled to mixing vessel H through 23.

## CLAIMS

1. Process for the recovery of a uranium-containing concentrate and phosphoric acid, by digesting phosphate rock with sulphuric acid, separating calcium sulphate from the digestion liquor and, if so desired, evaporating the remaining phosphoric acid solution, and by treating the phosphoric acid solution with a reducing agent, an organic dispersant and an inorganic precipitating agent containing fluorine, separating out the uranium-containing precipitate thus formed, and recovering the phosphoric acid from the remaining mixture, characterized in that the fluorine- and silicon-containing gases obtained in the phosphate rock digestion and in the optional phosphoric acid evaporation are absorbed in water, at least part of the fluosilic acid solution thus formed is converted with ammonia to a silica-containing ammonium fluoride solution, the silica is separated out, and the remaining ammonium fluoride solution applied as precipitating agent for the uranium precipitation.
2. Process according to claim 1, characterized in that at least part of the silica obtained is added to the resultant phosphoric acid, and the silicofluoride-containing gases thus formed are separated from the phosphoric acid.
3. Process according to claim 2, characterized in that the silicofluoride-containing gases are recycled and absorbed in water to form a fluosilic acid solution.

1/1

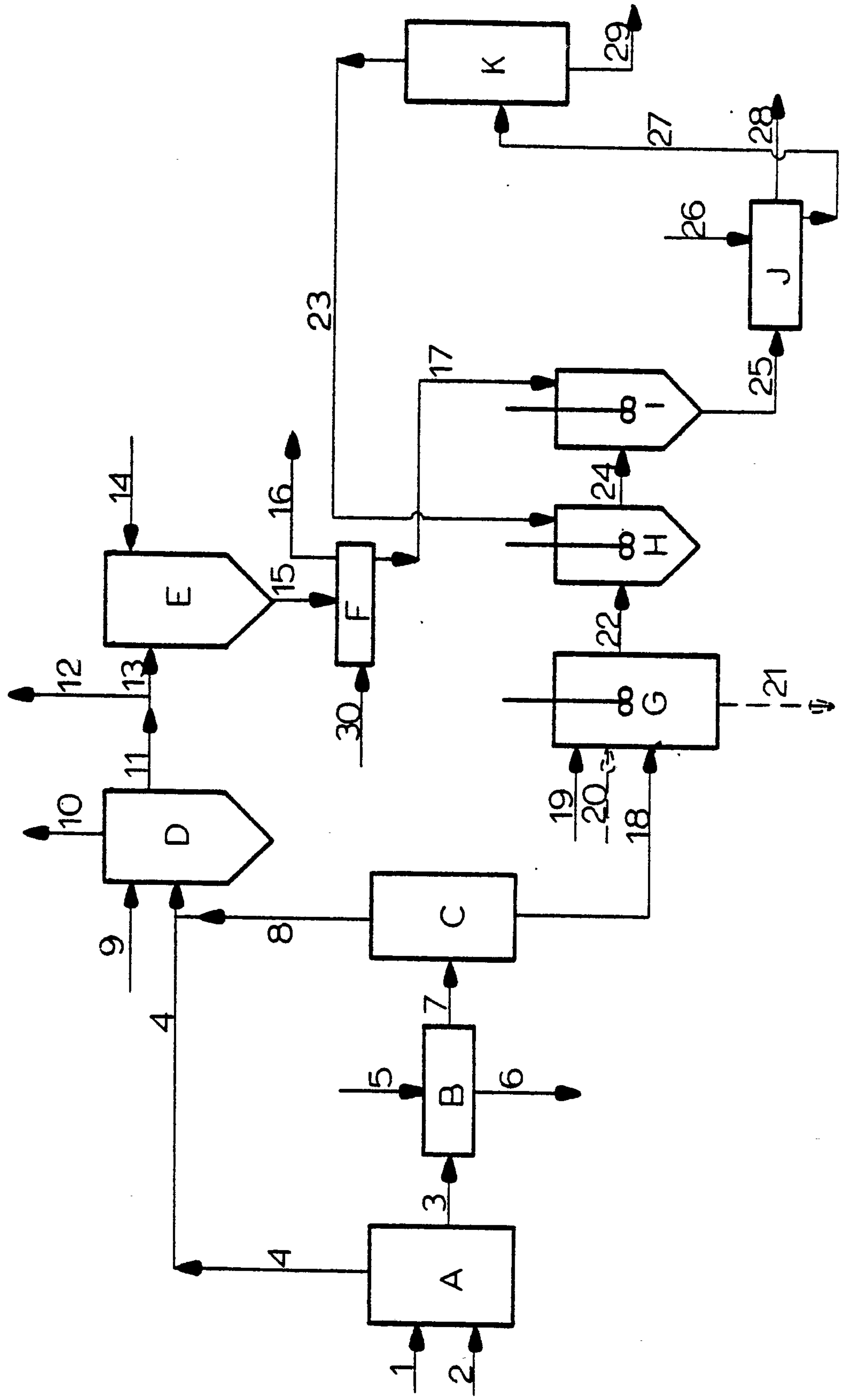
A
B
C
D
E
F
G
H
I
J
K
1
2
3
4
5
6
7
8
9
10
11
12
13
14
15
16
17
18
19
20
21
22
23
24
25
26
27
28
29
30

European Patent Office

# EUROPEAN SEARCH REPORT

0053409

Application number

EP 81 20 1220

| Category | Citation of document with indication, where appropriate, of relevant passages | Relevant to claim | CLASSIFICATION OF THE APPLICATION (Int. Cl. 3) |
|---|---|---|---|
| | DOCUMENTS CONSIDERED TO BE RELEVANT | | C 22 B 60/02<br>C 01 B 25/46<br>C 01 G 43/01 |
| AD | EP - A - 0 015 589 (STAMICARBON BV) | | |
| A | US - A - 4 026 997 (S. SCHNEIDER) | | |
| A | US - A - 3 669 621 (M. SCHULZE) | | |
| A | US - A - 2 819 145 (R.F. McCUL-LOUGH) | | |
| | ---- | | |

TECHNICAL FIELDS SEARCHED (Int.Cl. 3)

C 22 B 60/02
C 01 G 43/01
C 01 B 25/46

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

x The present search report has been drawn up for all claims

| Place of search | Date of completion of the search | Examiner |
|---|---|---|
| The Hague | 10-03-1982 | JACOBS |